# EUROPÄISCHE PATENTANMELDUNG

(11) **EP 2 445 319 A2**
(43) Veröffentlichungstag der Anmeldung: **25.04.2012**
(21) Anmeldenummer: 11186483.1
(22) Anmeldetag: 25.10.2011
(51) Int. Cl.: H05B 41/288, H05B 41/38

(54) **Verfahren und Vorrichtung zum Festlegen von zumindest einem Dimmparameter für eine, an einem Multilampen-Betriebsgerät angeschlossene Hochdruck (HID)-Entladungslampe mit vorgegebener Nennleistung**

(30) Priorität: 25.10.2010 DE 102010042887
(71) Anmelder: BAG engineering GmbH, 59759 Arnsberg (DE)
(72) Erfinder: Schreyer, Günter, 59581 Warstein (DE); Steinbrecht, Alexander, 32584 Löhne (DE)
(74) Vertreter: Lippert, Stachow & Partner

(57) **Zusammenfassung**

Um beim Betrieb einer Hochdruck-Entladungslampe aus einem Ensemble von unterschiedlichen Entladungslampen bezüglich ihres Typs, jedoch mit gleicher Nennleistung zumindest einen, der jeweiligen Lampe zugeordneten Dimmparameter zu erfassen, sodass die Lampe dann mit dem ihr zugeordneten Dimmparameter betrieben werden kann wird ein Verfahren vorgeschlagen, bei dem nach dem Zünden der Lampe diese zunächst bei der Nennleistung (PN) stabil betrieben und an diesem ersten Betriebpunkt (N1) die Lampenspannung (UN) erfasst wird, wobei nachfolgend zumindest ein weiterer Betriebspunkt (Ni) mit einer weiteren Lampenleistung (Pi) eingestellt wird, die kleiner ist als die Nennleistung (PN), wobei nach Erreichen des weiteren Betriebspunktes (Ni) wiederum die Lampenspannung (Ui) erfasst wird und zumindest eine Differenz von gemessenen Lampenspannungen bestimmt wird, und wobei der Leuchtmitteltyp der Lampe in Abhängigkeit der bestimmten, zumindest einen Spannungsdifferenz ermittelt und der zumindest eine Dimmparameter in Abhängigkeit des ermittelten Leuchtmitteltyps der Lampe festgelegt wird.

## Beschreibung

Die Erfindung betrifft ein Verfahren zum Festlegen von zumindest einem Dimmparameter für eine, an einem Multilampen-Betriebsgerät angeschlossene Hochdruck (HID)-Entladungslampe mit vorgegebener Nennleistung. Darüber hinaus betrifft die Erfindung ein Multilampen-Betriebsgerät zur Durchführung eines solchen Verfahrens.

Auf dem Gebiet bekannt ist ein Verfahren zum Erkennen der Nennleistung einer an einem Mehrlampen-Betriebsgerät angeschlossenen Hochdruck (HID)-Entladungslampe, bei welchem die Entladungslampe zunächst mit der kleinsten Betriebsleistung aller zu erkennenden Lampen betrieben wird. Bei dem in der deutschen Offenlegungsschrift DE 10 2008 016 753 A1 beschriebenen Verfahren wird ermittelt, ob der mit dieser Betriebsleistung sich ergebende Betriebspunkt in der Spannungs/Strom-Kennlinie der Hochdruck-Entladungslampe eine positive Steigung aufweist. Falls dies der Fall ist, wird erkannt, dass die Nennleistung der angeschlossenen Lampe der im ersten Schritt eingestellten Betriebsleistung entspricht. Wird dagegen im ersten Betriebspunkt eine negative Steigung der Spannung/Strom-Kennlinie erfasst, wird die nächst größere Nennleistung aus dem Ensemble der zu differenzierenden Lampen eingestellt und wiederum ermittelt, ob im eingestellten Betriebspunkt die Spannung/Strom-Kennlinie eine positive Steigung aufweist.

Dagegen kann es in bestimmten Beleuchtungsanwendungen auch sinnvoll sein, ein Multilampen-Betriebsgerät vorzusehen, das mit Lampen betreibbar ist, welche alle die gleiche Nennleistung besitzen, jedoch ein unterschiedliches Leuchtmittel aufweisen. Aufgrund des unterschiedlichen Aufbaus der an das jeweilige Multilampen-Betriebsgerät anschließbaren Entladungslampen ergeben sich unterschiedliche Betriebsparameter, insbesondere in Bezug auf den Dimmbetrieb einer derartigen Lampe.

Insofern liegt der vorliegenden Erfindung die Aufgabe zugrunde, beim Betrieb einer Hochdruck-Entladungslampe aus einem Ensemble von unterschiedlichen Entladungslampen bezüglich ihres Typs, jedoch mit gleicher Nennleistung zumindest einen, der jeweiligen Lampe zugeordneten Dimmparameter zu erfassen, sodass die Lampe dann mit dem ihr zugeordneten Dimmparameter betrieben werden kann.

Diese Aufgabe löst die Erfindung verfahrensseitig schon mit einem Verfahren mit den Merkmalen von Anspruch 1. Das erfindungsgemäße Verfahren zeichnet sich dadurch aus, dass nach dem Zünden der Lampe diese zunächst bei der vorgegebenen Nennleistung stabil betrieben und an diesem ersten Betriebspunkt die Lampenspannung erfasst wird, wobei nachfolgend zumindest ein weiterer Betriebspunkt mit einer weiteren Lampenleistung eingestellt wird, die kleiner ist als die Nennleistung, und wobei nach stationärem Erreichen des weiteren Betriebspunktes wiederum die Lampenspannung erfasst wird und zumindest eine einzelne Differenz von gemessenen Lampenspannungen bestimmt wird, wobei der Leuchtmitteltyp der Lampe in Abhängigkeit der bestimmten, zumindest einen Spannungsdifferenz ermittelt und der zumindest eine Dimmparameter in Abhängigkeit des ermittelten Leuchtmitteltyps der Lampe, respektive in Abhängigkeit der zumindest einen Spannungsdifferenz festgelegt und dem Betrieb der Lampe zugrunde gelegt wird.

Das erfindungsgemäße Verfahren eignet sich insbesondere bei einem Betrieb einer dimmbaren Hochdruck-Entladungslampe an einem Multilampen-Betriebsgerät, wobei diese Lampe eine vorgegebene Nennleistung wie beispielsweise 150 Watt aufweist und die Lampe insbesondere eine Metall-Halogen-Dampflampe oder eine Natrium-Hochdrucklampe sein kann. Mit dem erfindungsgemäßen Verfahren wird der jeweilige HID-Leuchtmitteltyp automatisch erfasst, sodass das Multilampen-Betriebsgerät die erkannte Lampe mit dem ihr zugeordneten Dimmparameter betreiben kann, ohne dass der Anwender über das Anordnen der Lampe zur Speisung durch das Multilampen-Betriebsgerät hinaus irgend eine weitere Handlung durchführen muss, um die Lampe optimal mit ihren spezifischen Dimmparametern zu betreiben.

Es sei darauf hingewiesen, dass vorliegend die Bezeichnung "stabiles Betreiben der Lampe an einem Betriebspunkt" das Erreichen eines statischen oder stationären Arbeitspunktes bezeichnet, der sich dadurch auszeichnet, dass sich die Lampenspannung bei eingestelltem Lampenstrom nicht mehr ändert und damit der besagte Betriebspunkt mit vorgegebener Lampenleistung wie der Lampennennleistung erreicht ist. Nach der Ermittlung der Lampenspannung wird erfindungsgemäß danach der zweite Betriebspunkt bezüglich der Lampenleistung eingestellt, sodass auch dieser zweite Betriebspunkt in einer dynamischen Betriebsphase "angefahren" wird, an welchem sich die Lampenspannung bei der dann erreichten Lampenleistung nicht mehr ändert.

Die Begriffe "Ermitteln" oder "Erfassen" der Lampenspannung bezeichnen allgemein die Bestimmungen dieses Parameters. Der Vorgang kann allein durch Messen, jedoch zum Beispiel auch durch eine Messung und eine nachfolgende Berechnung oder eine andere beliebige Art der Bestimmung durchgeführt werden.

Die einzelnen Schritte des erfindungsgemäßen Verfahrens müssen nicht ohne zeitliche Verzögerung aufeinander folgen, stattdessen kann auch ein Zeitabstand zwischen nacheinander ausgeführten Verfahrensschritten bestehen. Beispielsweise kann nach dem erfindungsgemäßen Verfahren zunächst allein die Lampe gezündet und dann bei Ihrer Nennleistung so lange stabil betrieben werden, bis ein Befehl zum Dimmen der Lampe erfolgt, beispielsweise .ein entsprechendes Signal von einer Steuereinrichtung empfangen oder detektiert wird. Vorher kann die Lampenspannung an diesem Arbeitspunkt erfasst worden sein. In dieser Ausführungsform wird erst nach Erhalt des Dimmbefehls das erfindungsgemäße Verfahren fortgeführt und beendet, sodass mit Abschluss des Verfahrens die Lampe mit dem ihr zugehörigen Dimmparameter betrieben werden kann.

Zweckmäßigerweise wird abhängig von der zumindest einen ermittelten Lampenspannungsdifferenz der wenigstens eine, Leuchtmitteltyp abhängige Dimmparameter aus einem Speicher des Betriebsgerätes ausgelesen. Hierzu kann vorgesehen sein, dass in diesem Speicher eine vorbestimmte Tabelle abgelegt ist, mit welcher Werte von Lampenspannungsdifferenzen Werten von Dimmparametern zugeordnet sind. Durch einen Vergleich der gemessenen Lampenspannungsdifferenz mit den vorbestimmten, in der Tabelle abgelegten Werten kann dann der jeweils zugeordnete Dimmparameter ermittelt und für den Betrieb der Lampe festgelegt werden. Die Ermittlung des Leuchtmitteltyps der angeschlossenen Lampe ist insofern der Ermittlung des der jeweilige Lampe zugeordnete Dimmparameters gleichzusetzen.

Zweckmäßigerweise kann vorgesehen sein, dass durch den zumindest einen Dimmparameter der Dimmbereich der Lampe bestimmt wird. Dieser Dimmbereich kann z.B. den Leistungsbereich der Lampe festlegen, innerhalb dessen die Lampe ausgehend von ihrer Nennleistung betreibbar ist. Diese Vorgehensweise ist insbesondere dann vorteilhaft, wenn die an dem einen Multilampen-Betriebsgerät betreibbaren Entladungslampe gleicher Nennleistung sowohl Metall-Halogen-Dampflampen als auch Natrium-Hochdrucklampen sein können. Wie bekannt, werden beide Lampen unterschiedlichen Leuchtmitteltyps üblicherweise innerhalb unterschiedlichen Dimmbereichen betrieben, um eine verminderte Betriebszeit des jeweiligen Leuchtmittels zu vermeiden. Hierdurch kann sichergestellt werden, dass das jeweilige HID-Leuchtmittel in dem für dieses Leuchtmittel zugelassenen Leistungsbereich betrieben wird. Beispielsweise weist eine übliche Metall-Halogen-Dampflampe einen Dimmbereich von 100% bis 50% der Lampennennleistung auf, während dieser Bereich bei einer Natrium-Hochdrucklampe üblicherweise zwischen 100% und 30% der vorgegebenen Nennleistung liegt.

In einer Ausführungsform der Erfindung, insbesondere bei einer Ausführungsform, bei welcher die Anzahl der zu unterscheidenden Typen der HID-Leuchtmittel wie vorliegend gering ist, kann es ausreichend sein, nur zwei derartiger Betriebspunkte unterschiedlicher Lampenleistung anzufahren und auf der Basis der ermittelten Lampenspannungen durch Vergleich mit abgespeicherten Werten, insbesondere Schwellwerten von Lampendifferenzspannungen den Leuchtmitteltyp und damit den Dimmparameter zu ermitteln. Je größer die vorgegebene Anzahl von angefahrenen Betriebspunkten mit jeweilig vorgegebener Lampenleistung ist, umso genauer kann der dem Leuchtmittel zugeordnete Dimmparameter wie der Dimmbereich ermittelt werden.

Soweit mehr als zwei Betriebspunkte zur Festlegung des zumindest einen Dimmbereichs angefahren werden, ist es zweckmäßig, wenn die nacheinander eingestellten Betriebspunkte in Bezug auf ihre Lampenleistung, ausgehend von dem ersten Betriebspunkt, welcher der Nennleistung entspricht, stetig abfallen. Damit fällt die Brenntemperatur der Lampe im Laufe des Verfahrens stetig ab, was den Ablauf des Verfahrens beschleunigt.

Zweckmäßigerweise kann zur Ermittlung des Leuchtmitteltyps bzw. des zumindest einen Dimmparameters der Lampe eine Mehrzahl von Differenzwerten der an den eingestellten Betriebspunkten erfassten Lampenspannungen ermittelt und diese Differenzwerte jeweils mit einem oder mehreren vorgegebenen Schwellwerten verglichen werden. Beispielsweise kann bei einer Differenzierung von n Lampentypen einer Vorgabe von (n-1) Schwellwerten zweckmäßig sein, um die gewünschte Differenzierung innerhalb des Ensembles von dimmbaren Lampen mit gleicher Nennleistung, jedoch unterschiedlichem Leuchtmittel und damit unterschiedlichem Dimmparameter durchzuführen.

Darüber hinaus kann es auch zweckmäßig sein, an einem Betriebspunkt die Erfassung der Lampenspannung mehrmals durchzuführen und einen Mittelwert dieser erfassten Lampenspannung zu bilden, welcher für die nachfolgenden Berechnungen, insbesondere für die Lampenspannungsdifferenzermittlung zugrunde gelegt wird.

Besonders zweckmäßig ist es, wenn durch den zumindest einen Dimmparameter die gesamte Dimmkennlinie des ermittelten Leuchtmitteltyps in der Lampe festgelegt wird, sodass diese Lampe dann mit der ihr spezifisch zugeordneten Dimmkennlinie betrieben werden kann. Diese kann je nach Ausführungsform beispielsweise die Angabe der jeweiligen Betriebsparameter der Lampe zur Einstellung eines vorgegebenen Leuchtgrades beinhalten. Der bzw. die nach dem Betriebspunkt mit Nennleistung angefahrenen weiteren Betriebspunkte.mit geringerer Lampenleistung können insbesondere bezüglich ihrer Leistung mit äquidistantem Leistungsunterschied von 10 - 20%, insbesondere 15% ausgewählt werden.

Vorteilhaft ist es, wenn der ermittelte Dimmparameter der HID-Lampe über eine zugeordnete Kommunikationsschnittstelle an eine zentrale Steuereinrichtung eines Beleuchtungssystems übermittelt wird, sodass die zentrale Steuereinrichtung alle steuerungstechnisch relevanten Informationen besitzt.

Vorrichtungsseitig löst die Erfindung das obige technische Problem mit einem Multilampen-Betriebsgerät zum Betreiben von Hochdruck (HID) -Entladungslampen mit einer vorgegebenen Nennleistung und zum Erfassen von zumindest einem Dimmparameter für die Lampe, mit einer Zündvorrichtung und einem Wechselrichter zum Speisen der angeschlossenen Hochdruck (HID)-Entladungslampe und einer Steuereinrichtung, welche den Wechselrichter ansteuert. Das erfindungsgemäße Multilampen-Betriebsgerät zeichnet sich dadurch aus, dass die Steuereinrichtung so programmiert ist, dass nach dem zünden der Lampe zunächst ein erster Betriebspunkt bei der vorgegebenen Nennleistung eingestellt ist, an dem die Lampenspannung erfassbar ist, wobei nachfolgend zumindest ein weiterer Betriebspunkt mit einer weiteren Lampenleistung eingestellt ist, die kleiner ist als die vorgegebene Nennleistung, wobei nach Erreichen des weiteren Betriebspunktes wiederum die Lampenspannung erfassbar ist und zumindest eine Differenz von gemessenen Lampenspannungen bestimmbar ist, und wobei der Leuchtmitteltyp der Lampe in Abhängigkeit der bestimmten, zumindest eine Spannungsdifferenz ermittelt und der zumindest eine Dimmparameter in Abhängigkeit des ermittelten Leuchtmitteltyps der Lampe eingestellt wird.

Die Erfindung wird im Folgenden durch das Beschreiben einiger Ausführungsformen unter Bezugnahme auf die beiliegenden Zeichnungen erläutert, wobei
- Figur 1: eine erfindungsgemäße Schaltungsanordnung in Form eines Multilampen-Betriebsgerätes zum Betreiben einer Hochdruck-Entladungslampe,
- Figur 2: den Verlauf von Lampenspannung und Lampenstrom in Abhängigkeit der elektrischen Leistung für eine Metall-Halogen-Dampflampe und
- Figur 3: den Verlauf von Lampenstrom und Lampenspannung in Abhängigkeit der elektrischen Leistung für eine Natrium-Dampflampe
- Figur 4: in einem Ablaufdiagramm eine Ausführungsform des erfindungsgemäßen Verfahrens zum Festlegen von zumindest einem Dimmparameter für eine, an einem Multilampen-Betriebsgerät angeschlossene Hochdruck-Entladungslampe mit vorgegebener Nennleistung
zeigt.

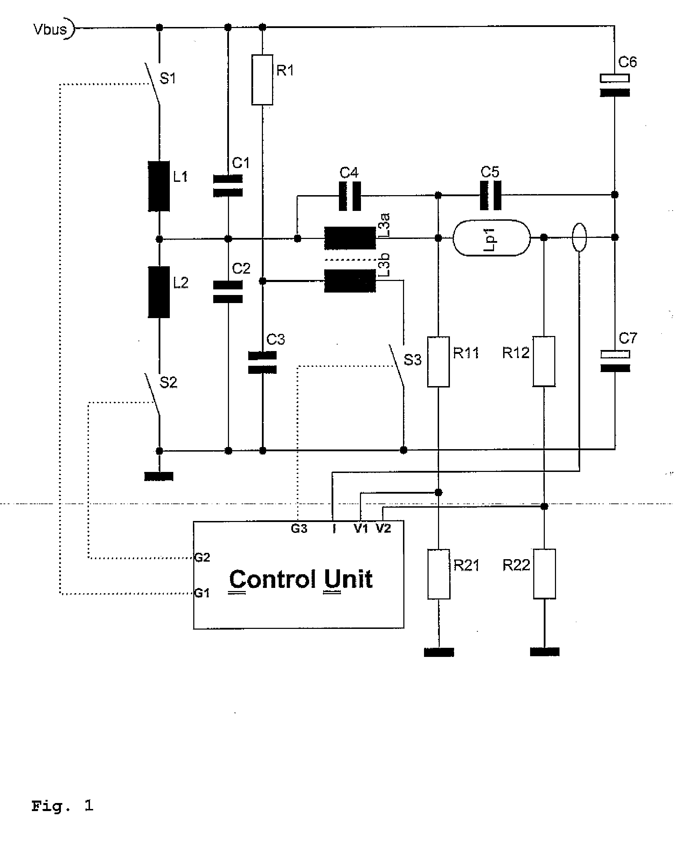

Figur 1 zeigt schematisch ein Multilampen-Betriebsgerät zum Betreiben von dimmbaren Hochdruck (HID)-Entladungslampen einer festen, vorgegebenen Nennleistung, mit welcher das erfindungsgemäße Verfahren ausgeführt werden kann zum Festlegen von zumindest einem Dimmparameter für die in das Betriebsgerät eingesetzte Lampe, welche aus einem Ensemble von Lampen ausgewählt ist, welche alle die gleiche Nennleistung besitzen. Das Betriebsgerät ist in der dargestellten Ausführungsform als Halbbrücke mit zwei steuerbaren Schaltern S1, S2 eines Wechselrichters ausgebildet, der von einer Gleichspannung VBus gespeist wird. Diese Gleichspannung VBus kann aus einer Gleichspannungsquelle entnommen sein oder alternativ aus einer gleichgerichteten Netzspahnungsquelle. Die in der Regel als Halbleiterschalter wie einem Feldeffekttransistor ausgebildeten Schalter S1, S2 werden von einer Steuereinheit CU zum Öffnen und Schließen angesteuert. Die Halbbrücke speist eine Hochdruck-Entladungslampe Lp1 mit einer Nennleistung von 150 Watt über die Halbbrücken-Kondensatoren. C6, C7. Die Lampe kann in der beschriebenen Ausführungsform entweder eine Metal.l-Halogen-Dampflampe oder eine Natrium-Dampflampe mit der besagten Nennleistung von 150 Watt sein. Derartige Hochdruck-Entladungslampen benötigen im Gegensatz zu Niederdruck-Gasentladungslampen eine vergleichsweise hohe Zündspannung, darüber hinaus weisen sie eine hohe Leuchtdichte auf, weshalb sie häufig zur Beleuchtung im Außenbereich eingesetzt werden.

Zum Zünden der Lampe Lp1 weist die in Figur 1 dargestellte beispielhafte Schaltungsanordnung ein Zündschaltungsteil auf, welcher einen Stoßkondensator C3 umfasst, der über den Widerstand R1 von der Gleichspannung VBus geladen wird. Der Zündschaltungsteil umfasst ferner den primärseitigen Teil L3b eines Übertragers L3b eines übertragers L3b/L3a sowie einen Schalter S3, welcher auch von der Steuereinrichtung CU gesteuert wird. Durch Schließen des Schalters S3 entlädt sich der Kondensator C3, sodass ein primärseitiger Zündimpuls erzeugt wird, welcher mit einem entsprechenden Übertragungsverhältnis auf die Lampe Lp1 übertragen wird, um die notwendige Durchbruchspannung in der Lampe bereitzustellen.

Der Halbbrückenwechselrichter umfasst ferner die beiden Drosselspulen L1, L2 sowie die Glättungskondensatoren C1, C2, C4 und C5. Mittels des Widerstandsnetzwerks L11, R21 und R12, R22 erfasst das Betriebsgerät die Potentiale an den Elektroden der Lampe und damit die Lampenspannung Ui als Differenz beider Potentiale. Die beiden Lampenpotentiale liegen an den zugeordneten Eingängen der Steuereinrichtung CU an. In der Figur vorrichtungsseitig schematisch angegeben ist auch das Mittel zum Erfassen des Lampenstroms, ein zugeordnetes Signal liegt am Eingang I der Steuereinrichtung CU an.

Das Ansteuern der Schalter S1, S2 erfolgt in der beschriebenen Ausführungsform mit Hilfe eines pulsweitenmodulierten Steuersignals, welches von der Steuereinrichtung CU an deren Ausgängen G1, G2 abgegeben wird. Über den Tastgrad des pulsweitenmodulierten Signals kann ausgehend von der Nennleistung und in Abhängigkeit eines vorgegebenen Dimmwertes die an die Lampe abgegebene elektrische Leistung eingestellt werden. In einer bevorzugten Ausführungsform arbeitet die Halbbrücke als Stromquelle für die Lampe, wobei die der Lampe zugeführte Leistung gesteuert bzw. geregelt wird unter Berücksichtigung der erfassten Lampenspannung bzw. des erfassten Lampenstroms. In einer Ausführungsform wird auf eine einstellbare Leistung geregelt, wobei der Strom als Sollgrö-βe fungiert und allein die sich ergebende Lampenspannung gemessen wird.

Es sei darauf hingewiesen, dass in einer nicht dargestellten Ausführungsform das Multilampen-Betriebsgerät statt einer Halbbrücke auch eine Vollbrücke aufweisen kann. Darüber hinaus kann als Zündanordnung auch ein Serienresonanzkreis vorgesehen sein, umfassend zumindest eine Induktivität sowie eine Kapazität, in welchem die Lampe angeordnet ist.

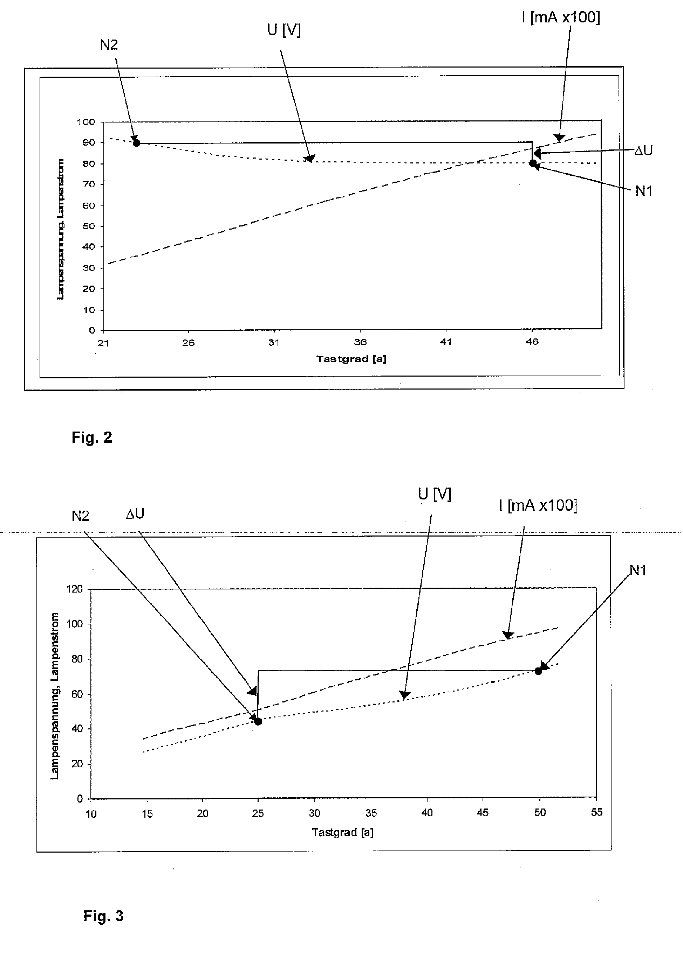

Figur 2 zeigt den Verlauf von Lampenstrom und Lampenspannung für eine Metall-Halogen-Dampflampe in Abhängigkeit des Tastgrades des pulsweitenmodulierten Steuersignals zur Ansteuerung der Schalter S1, S2. Dieser Tastgrad korrespondiert direkt mit der elektrischen Leistung, welche der Lampe zugeführt wird. In der Darstellung sind die beiden Betriebspunkte N1 bzw. N2 markiert entsprechend einem Tastgrad von 46% bzw. 23%, welche der Nennleistung von 150 Watt bzw. dem Dimmgrad von 50% entsprechen. Wie aus der Kennliniendarstellung hervorgeht, vergrößert sich die Lampenspannung ausgehend vom Betriebspunkt N1 entsprechend der Nennleistung zum Betriebspunkt N2 entsprechend einer Leistung von 50% der Nennleistung nur geringfügig, etwa um 12%. Ferner ist festzustellen, dass sich die Spannung bei verminderter Leistung erhöht.

Demgegenüber zeigt Figur 3 den Verlauf des Lampenstroms bzw. der Lampenspannung wiederum in Abhängigkeit des Tastgrades, d.h. der elektrischen Leistung für eine Natrium-Dampflampe. Bei dem in Figur 3 dargestellten Beispiel wird die Nennleistung von 150 Watt bei einem Tastgrad von 50% erreicht mit dem Betriebspunkt N1, dem Betriebspunkt N2 bei 75 Watt Lampenleistung entspricht hier einem Tastgrad von 25%. Wie zu erkennen, beträgt die Differenz der Lampenspannung in den beiden angegebenen Betriebspunkten ausgehend von dem Betriebspunkt der Nennleistung etwa 40%. Darüber hinaus ist festzustellen, dass die Lampenspannung mit verminderter Lampenleistung fällt.

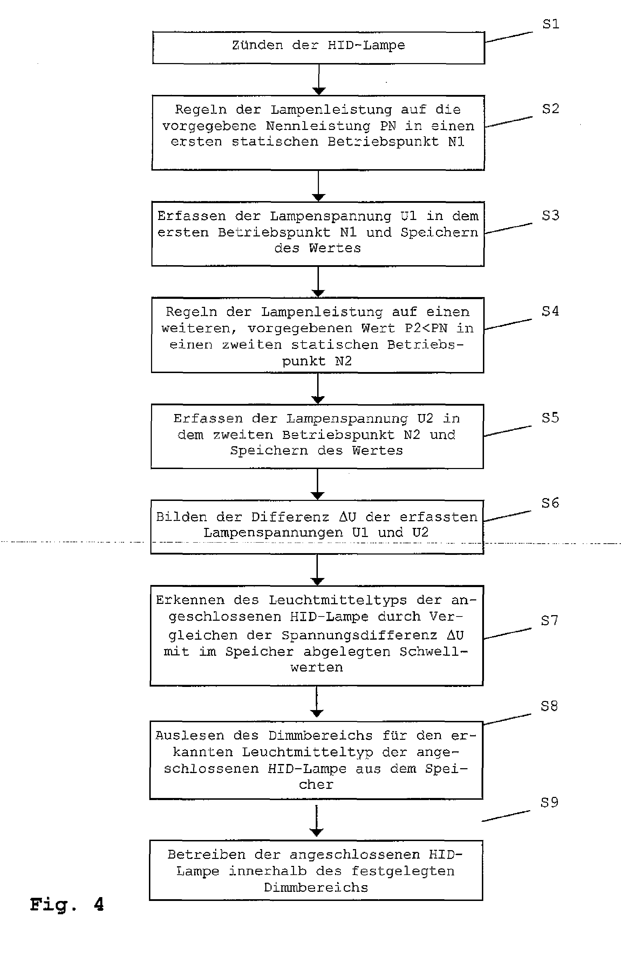

Mit Bezug auf die Figuren 2, 3 und 4 wird im Folgenden eine Ausführungsform eines erfindungsgemäßen Verfahrens beschrieben, wobei Figur 4 ein Flussdiagramm des Verfahrens zeigt. Im Folgenden wird davon ausgegangen, dass die in Figur 1 dargestellte Halbbrückenschaltung die Lampe Lp1 zunächst durch Ansteuern des Schalters S3 zum Erzeugen eines sekundärseitigen Zündimpulses von mehreren kV zündet. Die Schalter S1, S2 werden von der Steuereinrichtung CU nach der Zündung zum Bereitstellen der Nennleistung von 150 Watt angesteuert. Dabei schließt sich nach dem Zünden zunächst eine Elektrodenaufheizphase von in der Regel einige Sekunden an, danach erfolgt das Aufwärmen der Lampe auf seine Endtemperatur entsprechend der eingestellten Nennleistung bzw. den entsprechenden Tastgrad des Ansteuersignals für die Schalter S1, S2. Da sich der Widerstand der Lampe und damit die Lampenspannung beim Anfahren der Nennleistung kontinuierlich erhöhen, wird der Lampenstrom im Laufe dieser dynamischen Phase durch Regelung auf die Nennleistung kontinuierlich verringert. Am Ende dieser dynamischen Phase ist der erste stabile Betriebspunkt N1 mit der Nennleistung PN erreicht, siehe die in den Figuren 2, 3 angegebenen Betriebspunkte. Im Flussdiagramm ist der Verfahrensschritt S2 damit beendet.

Nach Erreichen des stabilen Betriebspunktes, an welchem die Lampe mit der Nennleistung betrieben wird, schließt sich der Schritt S3 an, bei welchem die sich ergebende Lampenspannung erfasst wird. Hierzu werden die Potentiale V1, V2 an den beiden Lampenelektroden gemessen und das Differenzpotential als Lampenspannung ermittelt. Bei der Metall-Halogen-Dampflampe gemäß Figur 2 ergibt sich eine Lampenspannung von etwa 80 Volt, bei der Natrium-Dampflampe gemäß Figur 3 eine Lampenspannung von etwa 74 Volt bei der angegebenen Nennleistung von 150 Watt. Im darauffolgenden Verfahrensschritt S4, siehe Figur 4 wird die Lampe auf einen zweiten Betriebspunkt N2 geregelt mit einer zweiten Lampenleistung P2, welche in der beschriebenen Ausführungsform gerade 50% der Nennleistung beträgt. Es versteht sich, dass auch andere Lampenleistungen möglich sind, es sollte allein sichergestellt sein, dass diese zweite angefahrene Lampenleistung kleiner als die Nennleistung ist und der eingestellte Dimmgrad nicht außerhalb des Dimmbereichs einer der Lampen des Lampenensembles liegt.

Auch dieser zweite Betriebspunkt N2 wird dynamisch angesteuert oder angefahren, wobei die Lampenleistung auf den zweiten vorgegebenen Wert P2, d.h. hier 75 Watt geregelt wird. Nach Erreichen des zweiten statischen Betriebspunktes N2 wird wiederum die Lampenspannung, hier U2 gemessen, Schritt S1. Im Falle der Metall-Halogen-Dampflampe ergibt sich gemäß Figur 2 eine Spannung von etwa 90 Volt, die Lampenspannung im zweiten statischen Betriebspunkt N2 für die Natrium-Dampflampe gemäß Figur 3 beträgt etwa 44 Volt.

Gemäß Schritt S6 kann nun die Differenzspannung ΔU der erfassten Lampenspannungen U1 und U2 ermittelt werden. Diese beträgt im Falle der Metall-Halogenlampe etwa -10 Volt, im Falle der Natrium-Dampflampe beträgt die Differenzspannung ΔU etwa +30 Volt. In der beschriebenen Ausführungsform des erfindungsgemäßen Verfahrens ist die in der Schaltung gemäß Figur 1 eingesetzte Lampe Lp1 aus einem Ensemble von zwei Lampen mit unterschiedlichem Lampentyp entnommen. Dementsprechend ist im Speicher der Steuereinrichtung ein Schwellenwert abgelegt, welcher mit dem gemessenen Wert ΔU verglichen wird um eine Entscheidung zu treffen, welcher Leuchtmitteltyp die eingesetzte Lampe ist gemäß Schritt S7, siehe Figur 2. Der dem jeweiligen Leuchtmitteltyp zugeordnete Dimmbereich ist im Speicher der Steuervorrichtung CU abgelegt und wird nachfolgend zum Betrieb der Lampe verwendet. Wird eine Metall-Halogen-Dampflampe erkannt, beträgt der Dimmbereich 100% bis 50% der Nennleistung der Lampe, bei einer Natrium-Hochdrucklampe beträgt dieser 100% bis 30% der Nennleistung.

In einer weiteren.Ausführungsform ist vorgesehen, dass zusätzlich zu dem Dimmbereich auch die Dimmkennlinie für die verschiedenen Leuchtmitteltypen hinterlegt sind, sodass die Lampe eines erkannten Leuchtmitteltyps mit der jeweils zugeordneten Dimmkennlinie betrieben werden kann.

Soweit eine größere Anzahl von Leuchtmitteltypen erkannt werden soll, sind weitere Schwellwerte bezüglich der Lampenspannungsdifferenzen festzulegen, um die notwendige Differenzierung durchzuführen. Darüber hinaus ist in einer weiteren Ausführungsform vorgesehen, ausgehend von der Nennleistung mehr als zwei Betriebspunkte einzustellen und beim Erreichen eines stabilen Zustands die jeweilige Lampenspannung zu erfassen, sodass eine Mehrzahl von Differenzwerten der an den eingestellten Betriebspunkten erfassten Lampenspannungen ermittelt werden kann und diese Differenzwerte jeweils mit einem oder mehreren vorgegebenen Schwellwerten verglichen werden, um den Lampentyp bzw. den zumindest einen Dimmparameter zu ermitteln.

## Patentansprüche

1. Verfahren zum Festlegen von zumindest einem Dimmparameter für eine, an einem Multilampen-Betriebsgerät angeschlossene Hochdruck (HID)-Entladungslampe mit vorgegebener Nennleistung, **dadurch gekennzeichnet, dass** nach dem zünden der Lampe diese zunächst bei der Nennleistung (PN) stabil betrieben und an diesem ersten Betriebpunkt (N1) die Lampenspannung (UN) erfasst wird, wobei nachfolgend zumindest ein weiterer Betriebspunkt (Ni) mit einer weiteren Lampenleistung (Pi) eingestellt wird, die kleiner ist als die Nennleistung (PN), wobei nach Erreichen des weiteren Betriebspunktes (Ni) wiederum die Lampenspannung (Ui) erfasst wird und zumindest eine Differenz von gemessenen Lampenspannungen bestimmt wird, und wobei der Leuchtmitteltyp der Lampe in Abhängigkeit der bestimmten, zumindest einen Spannungsdifferenz ermittelt und der zumindest eine Dimmparameter in Abhängigkeit des ermittelten Leuchtmitteltyps der Lampe festgelegt wird.

2. Verfahren nach Anspruch 1, **dadurch gekennzeichnet, dass** der zumindest eine, leuchtmitteltypabhängige Dimmparameter aus einem Speicher des Betriebsgeräts ausgelesen wird.

3. Verfahren nach Anspruch 1 oder 2, **dadurch gekennzeichnet, dass** durch den zumindest einen Dimmparameter der Dimmbereich der Lampe festlegt wird.

4. Verfahren nach Anspruch 1 oder 2, daduch gekennzeichnet, dass eine vorgegebene Anzahl von Betriebspunkten mit jeweiliger Lampenleistung (Pi) eingestellt wird.

5. Verfahren nach einem der Ansprüche 1 bis 4, **dadurch gekennzeichnet, dass** die Mehrzahl, insbesondere alle eingestellten Lampenleistungen (Pi) vorbestimmt sind.

6. Verfahren nach einem der Ansprüche 1 bis 5, **dadurch gekennzeichnet, dass** die nacheinander eingestellten Betriebspunkte (Ni) in Bezug auf die Lampenleistung (Pi) stetig abfallen.

7. Verfahren nach einem der Ansprüche 1 bis 6, **dadurch gekennzeichnet, dass** zur Ermittlung des Leuchtmitteltyps bzw. des zumindest einen Dimmparameters der Lampe eine Mehrzahl von Differenzwerten (ΔUij) der an den eingestellten Betriebspunkten (Ni) erfassten Lampenspannungen ermittelt werden und diese Differenzwerte (ΔUij) jeweils mit einem oder mehreren vorgegebenen Schwellwerten verglichen werden.

8. Verfahren nach Anspruch 7, **dadurch gekennzeichnet, dass** zumindest ein Schwellwert den Wert Null aufweist.

9. Verfahren nach einem der Ansprüche 1 bis 8, **dadurch gekennzeichnet, dass** durch den zumindest einen Dimmparameter die Dimmkennlinie der Lampe festlegt wird, und die Dimmung der Lampe auf der Grundlage dieser Dimmkennlinie durchgeführt wird.

10. Verfahren nach einem der Ansprüche 1 bis 9, **dadurch gekennzeichnet, dass** der ermittelte Dimmparameter der Lampe an eine zentrale Steuereinrichtung eines Beleuchtungssystems übermittelt wird.

11. Multilampen-Betriebsgerät zum Betreiben von Hochdruck (HID)-Entladungslampen einer vorgegebenen Nennleistung und zum Erfassen von zumindest einem Dimmparameter für die Lampe, mit einer Zündvorrichtung und einen Wechselrichter zum Speisen der angeschlossenen Hochdruck (HID)-Entladungslampe und einer Steuereinrichtung (CU), welche den Wechselrichter ansteuert, **dadurch gekennzeichnet, dass** die Steuereinrichtung so programmiert ist, dass nach dem Zünden der Lampe zunächst ein ersten Betriebpunkt (N1) bei der Nennleistung (PN) eingestellt ist an dem die Lampenspannung (UN) erfassbar ist, wobei nachfolgend zumindest ein weiterer Betriebspunkt (Ni) mit einer weiteren Lampenleistung (Pi) eingestellt ist, die kleiner ist als die Nennleistung (PN), wobei nach Erreichen des weiteren Betriebspunktes (Ni) wiederum die Lampenspannung (Ui) erfassbar ist und zumindest eine Differenz von gemessenen Lampenspannungen bestimmbar ist, und wobei der Leuchtmitteltyp der Lampe in Abhängigkeit der bestimmten, zumindest einen Spannungsdifferenz ermittelbar und der zumindest eine Dimmparameter in Abhängigkeit des ermittelten Leuchtmitteltyps der Lampe eingestellbar ist.
